# EUROPEAN PATENT APPLICATION

(11) **EP 3 153 944 A1**
(43) Date of publication of application: **12.04.2017**
(21) Application number: 15802757.3
(22) Date of filing: 20.05.2015
(51) Int. Cl.: G06F 3/01, G06F 3/041, G06F 3/0488

(54) **TACTILE SENSATION PRESENTATION DEVICE**

(30) Priority: 04.06.2014 JP 2014115756
(71) Applicant: Kabushiki Kaisha Tokai-Rika-Denki-Seisakusho, Niwa-gun, Aichi-ken 480-0195 (JP)
(72) Inventor: YAMASHITA, Koshiro, Niwa-gun Aichi 480-0195 (JP)
(74) Representative: Betten & Resch
(86) International application number: PCT/JP2015/064467
(87) International publication number: WO 2015/186520

(57) **Abstract**

A tactile sensation presentation device is provided whereby a tactile sensation is provided in a direction in which a vibration can easily be felt by an operator. A tactile sensation presentation device (1) includes a panel (10) having, within a front surface (100), a surface shape such that respective normal lines at two different points intersect by being parallel moved, a detector (12) that detects an operation performed on the front surface (100) of the panel (10), a tactile sensation presenter (14) that presents a tactile sensation to an operator by providing a vibration to the panel (10), and a controller (16) that controls the tactile sensation presenter (14) so as to present the vibration in a direction intersecting a tangential plane including a detection point where the operation is detected.

## Description

### Technical Field

The present invention relates to a tactile sensation presentation device.

### Background Art

Touch panel display devices are known that are constituted by a flat plate type movable panel unit provided with a touch panel, movable support means that support the movable panel unit on a support structure so as to allow the movable panel unit to be displaced along a plane parallel to a panel surface of the movable panel unit, an actuator that drives the movable unit to vibrate, and actuator driving control means that control the driving of the actuator by sending actuator driving signals (e.g., see Patent Document 1).

The touch panel display device described in Patent Document 1 is configured so that the actuator causes the movable panel unit to vibrate along the plane parallel to the panel surface of the movable panel unit, thereby imparting a tactile sensation to a fingertip of an operator that is in contact with the panel surface.

### Citation List

### Patent Document

Patent Document 1: Japanese Unexamined Patent Application Publication No. 2007-034991A

### Summary of Invention

### Technical Problem

With the touch panel display device described in Patent Document 1, in cases where the operator is lightly in contact with the panel surface, only a vibration that imparts a rubbing sensation to the fingertip is generated, which may cause the operator to experience difficulty in feeling the tactile sensation.

An object of the present invention is to provide a tactile sensation presentation device whereby a tactile sensation is presented in a direction in which a vibration can easily be felt by an operator.

### Solution to Problem

A tactile sensation presentation device according to an aspect of the present invention includes a panel having, within a panel operating surface, a surface shape such that respective lines normal to two different points intersect via horizontal movement; a detector that detects an operation performed on the panel operating surface; a tactile sensation presenter that presents a tactile sensation to an operator by applying a vibration to the panel; and a controller that controls the tactile sensation presenter so as to present a vibration in a direction intersecting a tangential plane including a detection point where the operation is detected.

### Advantageous Effects of Invention

According to an aspect of the present invention, a tactile sensation presentation device can be provided whereby a tactile sensation is presented in a direction in which a vibration can easily be felt by an operator.

### Brief Description of Drawings

FIG. 1A is a schematic diagram illustrating an interior of a vehicle in which a tactile sensation presentation device according to a first embodiment is installed.
FIG. 1B is a schematic diagram illustrating an air conditioning device in which the tactile sensation presentation device is used as an operation part.
FIG. 2A is a front view illustrating the tactile sensation presentation device according to the first embodiment.
FIG. 2B is a top view illustrating the tactile sensation presentation device.
FIG. 2C is a cross-sectional view taken along line II(c)-II(c) of FIG. 2A.
FIG. 3A is a block diagram illustrating the tactile sensation presentation device according to the first embodiment.
FIG. 3B is a block diagram illustrating an air conditioning device in which the tactile sensation presentation device is used.
FIG. 4 is a flowchart illustrating operations of the tactile sensation presentation device according to the first embodiment.
FIG. 5A is a side view illustrating a tactile sensation presentation device according to a second embodiment.
FIG. 5B is a top view illustrating a tactile sensation presentation device according to a third embodiment.

### Description of Embodiments

### Overview of Embodiments

A tactile sensation presentation device according to the embodiments is generally configured to include a panel having a shape such that respective lines normal to two different points intersect via horizontal movement; a detector that detects an operation performed on a front surface of the panel; a tactile sensation presenter that presents a tactile sensation to an operator by applying a vibration to the panel; and a controller that controls the tactile sensation presenter so as to present a vibration in a direction intersecting a tangential plane at a detection point where the operation is detected.

This tactile sensation presentation device can present a vibration in the direction intersecting the tangential plane at the detection point where the operation is detected, through the panel that has a shape in which the normal lines intersect. Therefore, compared to cases where a vibration is presented in a surface direction of a flat operating surface in which the normal lines do not intersect, the tactile sensation can be presented in a direction in which a vibration can easily be felt by an operator.

### First Embodiment

### Configuration of Tactile Sensation Presentation Device 1

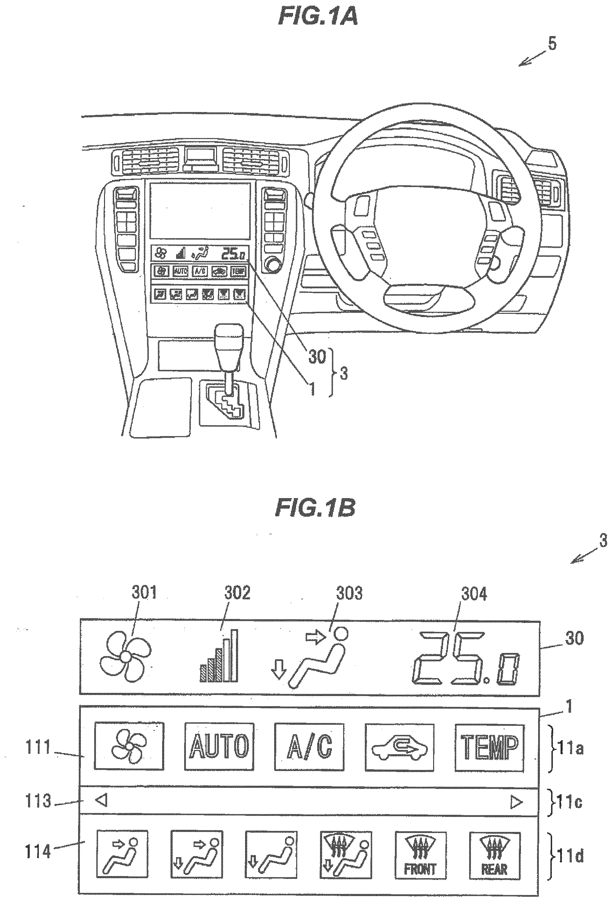

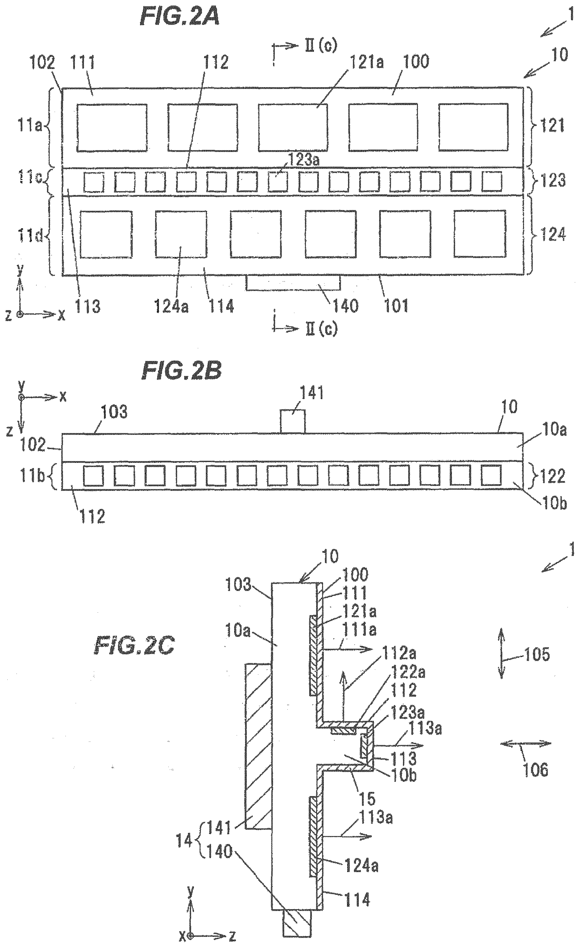

FIG. 1A is a schematic diagram illustrating an interior of a vehicle in which a tactile sensation presentation device according to a first embodiment is installed. FIG. 1B is a schematic diagram illustrating an air conditioning device in which the tactile sensation presentation device is used as an operation part. FIG. 2A is a front view of the tactile sensation presentation device according to the first embodiment. FIG. 2B is a top view of the tactile sensation presentation device. FIG. 2C is a cross-sectional view taken along line II(c)-II(c) of FIG. 2A, viewed in the direction of the arrows. In the drawings associated with the following embodiments, ratios between elements in the drawings may be different from the actual ratios.

As illustrated in FIG. 1A, as an example, the tactile sensation presentation device 1 is used as an operation part of an electronic device installed in a vehicle 5. An example of this electronic device is an air conditioning device 3. As illustrated in FIGS. 1A and 1B, the air conditioning device 3 is provided with the tactile sensation presentation device 1 as the operation part.

As illustrated in FIGS. 2A to 2C, the tactile sensation presentation device 1 is generally configured to include a panel 10 having a shape such that respective lines normal to two different points intersect via horizontal movement; a detector 12 that detects an operation performed on a front surface 100 (panel operating surface) of the panel 10; a tactile sensation presenter 14 that presents a tactile sensation to an operator by applying a vibration to the panel 10; a controller 16 that controls the tactile sensation presenter 14 so as to present a vibration in a direction intersecting a tangential plane at a detection point where the operation is detected; and a communicator 17 (described later).

### Configuration of Panel 10

As illustrated in FIGS. 2A and 2B, the panel 10 has a flat shape, and a first electrode group 121 to a fourth electrode group 124 are formed thereon. Additionally, a print layer 15 covering the first electrode group 121 to the fourth electrode group 124 is provided in the panel 10. An operator can execute functions associated with images, which are formed by the print layer 15, by performing touch operations on the images. The front surface 100 of the print layer 15 constitutes an operating surface (described later).

Additionally, as an example, the panel 10 is formed of a transparent acrylic, polycarbonate, or similar resin material. As an example, the panel 10 of the present embodiment is formed of polycarbonate.

A portion of the panel 10 is protruded or recessed, which forms a plurality of operating surfaces in the front surface 100. Specifically, as illustrated in FIG. 2C, the panel 10 includes a flat shape base portion 10a and a protruding portion 10b formed so that a portion of an operator-side surface of the base portion 10a is protruded. Note that the panel 10 may, for example, be formed of glass.

As illustrated in FIG. 2C, the panel 10 has a shape such that a line 111a normal to a first operating surface 111, a line 113a normal to a third operating surface 113 and a line 114a normal to a fourth operating surface 114 intersect a line 112a normal to a second operating surface 112 via horizontal movement.

An xyz coordinate system is set in the panel 10 wherein, on the paper plane of FIG. 2A, the horizontal direction is the x-axis, the vertical direction is the y-axis, and, a direction perpendicular to and oriented toward the paper plane is the z-axis. The origin point of this coordinate system is located in the lower left of the panel 10 on the paper plane of FIG. 2A. The detection point, where the fingertip of the operator is detected, is detected as coordinates in this xyz coordinate system at a slide operating portion 11b and a slide operating portion 11c (described later).

On the paper plane of FIG. 2A, the base portion 10a is mainly divided into two surfaces, namely, the first operating surface 111 that is the front surface 100 upper than the protruding portion 10b, and the fourth operating surface 114 that is the front surface 100 lower than the protruding portion 10b. As illustrated in FIG. 1B, a first button group 11a is disposed on the first operating surface 111. Additionally, a second button group 11d is disposed on the fourth operating surface 114.

The first button group 11a is configured from, for example, from the left side of the paper plane of FIG. 1B, an airflow button, an AUTO button, an A/C button, a recirculation/fresh select button, and a temperature control button. Additionally, the second button group 11d is configured from, for example, from the left side of the paper plane of FIG. 1B, an upper body air vent direction button, an upper body and feet air vent direction button, a feet air vent direction button, a feet and windshield air vent direction button, a windshield air vent direction button, and a rear window air vent direction button. These buttons are configured as capacitive touch switches that can be turned on and off by touch operations by the finger of an operator.

The protruding portion 10b is formed along a longitudinal direction of the base portion 10a, and has a quadrangular pillar shape. The protruding portion 10b includes the second operating surface 112 that is an operating surface oriented in an upward direction of the vehicle 5, and the third operating surface 113 that is an operating surface facing the operator in the same manner as the first operating surface 111 and the fourth operating surface 114. Note that in the protruding portion 10b of the present embodiment, electrodes are not disposed on a surface oriented in a downward direction of the vehicle 5 or surfaces oriented in left and right directions of the vehicle 5, but the present invention is not limited to this configuration and electrodes may be disposed as desired.

The slide operating portion 11b that detects slide operations is provided in the second operating surface 112. Moving a finger from left to right or from right to left, on the paper plane of FIG. 2B, with the finger in contact with the second operating surface 112 of the slide operating portion 11b can change a setting value of a function associated with the slide operating portion 11b. For example, in a case where a function of changing the airflow is assigned to the slide operating portion 11b, an operator can increase the airflow by slide operation from left to right and can decrease the airflow by slide operation from right to left.

Additionally, the slide operating portion 11 c that detects slide operations is provided in the third operating surface 113. A slide operation on the slide operating portion 11c from left to right or from right to left, on the paper plane of FIG. 2A, can change a setting value of a function associated with the slide operating portion 11 c. For example, in a case where a function of changing the set temperature is assigned to the slide operating portion 11c, an operator can raise the set temperature by slide operation from left to right and can lower the set temperature by slide operation from right to left. The slide operating portion 11b and the slide operating portion 11c are, for example, configured as capacitive touch switches.

### Configuration of Detector 12

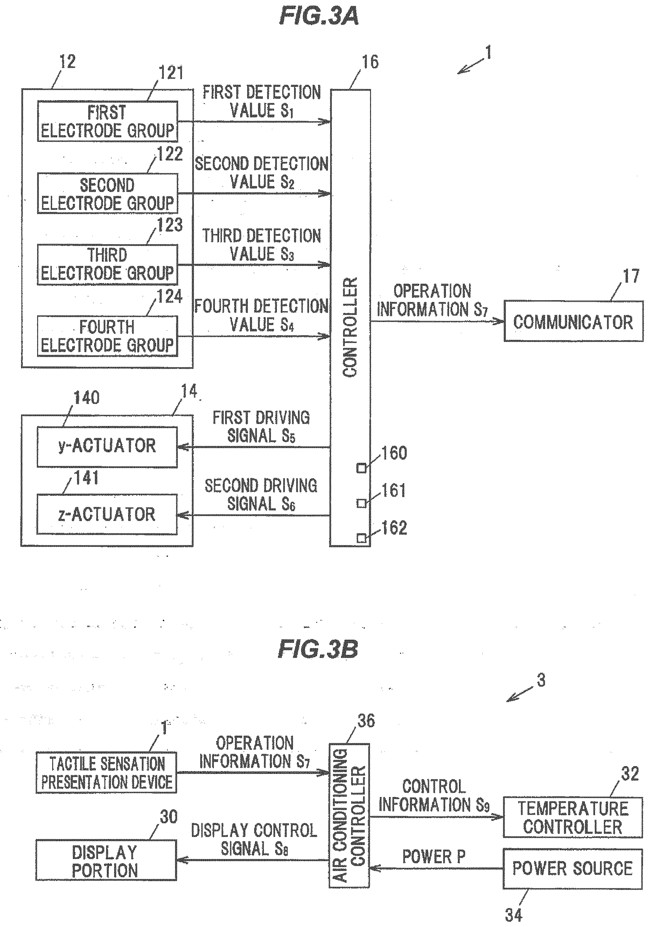

FIG. 3A is a block diagram illustrating the tactile sensation presentation device according to the first embodiment. FIG. 3B is a block diagram illustrating an air conditioning device in which the tactile sensation presentation device is used. In FIGS. 3A and 3B, arrows indicate the flows of primary signals, information, and the like.

As illustrated in FIG. 3A, the detector 12 is provided with, for example, the first electrode group 121 to the fourth electrode group 124 configured from capacitive touch switch detection electrodes. The first electrode group 121 to the fourth electrode group 124 contain, for example, copper, gold, or a similar metal material having electrical conductivity, and are formed in the panel 10. As an example, the first electrode group 121 to the fourth electrode group 124 of the present embodiment are configured to contain copper. Note that as a modified example, the first electrode group 121 to the fourth electrode group 124 may be formed on a flexible substrate and be stacked on the panel 10.

As illustrated in FIG. 2A, the first electrode group 121 is configured from rectangular electrodes disposed beneath each button of the first button group 11a. The first electrode group 121 includes, for example, five electrodes.

As illustrated in FIG. 2B, the second electrode group 122 is configured from rectangular electrodes disposed at a constant spacing on the second operating surface 112. Likewise, as illustrated in FIG. 2A, the third electrode group 123 is configured from rectangular electrodes disposed at a constant spacing on the third operating surface 113. The second electrode group 122 and the third electrode group 123 each include, for example, fourteen electrodes.

As illustrated in FIG. 2A, the fourth electrode group 124 is configured from rectangular electrodes disposed beneath each button of the fourth button group 11d. The fourth electrode group 124 includes, for example, six electrodes.

The first electrode group 121 to the fourth electrode group 124 described above are covered by the print layer 15. FIG. 2C illustrates a cross-section of an electrode 121a of the first electrode group 121, an electrode 122a of the second electrode group 122, an electrode 123a of the third electrode group 123, and an electrode 124a of the fourth electrode group 124, covered by the print layer 15. As an example, the print layer 15 is configured to be printed in black and so that portions of letters or images are not printed. Accordingly, designs of the buttons illustrated in FIG. 1B are formed by the print layer 15.

Note that as a modified example, the tactile sensation presentation device 1 may be configured such that a plurality of light sources that emit light from a back surface 103 toward the front surface 100 of the panel 10 are disposed corresponding to each of the buttons, and these light sources radiate light when the corresponding button is on.

As illustrated in FIG. 3A, the first electrode group 121 to the fourth electrode group 124 are electrically connected to the controller 16, and are configured to output a first detection value S₁ to a fourth detection value S₄. The first detection value S₁ to the fourth detection value S₄ are, for example, capacitance values generated by electrostatic coupling between the finger of the operator and the electrode.

As illustrated in FIG. 2A, the first electrode group 121 includes five electrodes. The detection values are individually acquired from these five electrodes. In the present embodiment, the detection value acquired from each electrode of the first electrode group 121 is represented as the first detection value S₁. In other words, the controller 16 is configured to acquire five different first detection values S₁ per period. Accordingly, the controller 16 acquires 14 different second detection values S₂ from the second electrode group 122, 14 different third detection values S₃ from the third electrode group 123, and six different fourth detection values S₄ from the fourth electrode group 124 per period.

### Configuration of Tactile Sensation Presenter 14

The tactile sensation presenter 14 includes a plurality of actuators that apply a vibration to the panel 10. Specifically, as illustrated in FIG. 3A, the tactile sensation presenter 14 includes a y-actuator 140 and a z-actuator 141 that cause the panel 10 to vibrate in directions that intersect each other.

The y-actuator 140 is disposed on a bottom surface 101 of the panel 10, and is configured to cause the panel 10 to vibrate in the y-axis direction. In FIG. 2C, the vibration direction of the y-actuator 140 is depicted as a first vibration direction 105. The y-actuator 140 vibrates, at a predetermined frequency, on the basis of a first driving signal S₅ output from the controller 16.

As illustrated in FIG. 2C, the y-actuator 140 is an actuator that vibrates when an operation is performed on the second operating surface 112. Accordingly, upon determination that an operation has been performed on the second operating surface 112, the controller 16 drives the y-actuator 140, which is capable of applying a vibration in a direction intersecting the second operating surface 112, that is, the direction of the line 112a normal to the second operating surface 112.

The z-actuator 141 is disposed on the back surface 103 of the panel 10, and is configured to cause the panel 10 to vibrate in the z-axis direction. In FIG. 2C, the vibration direction of the z-actuator 141 is depicted as a second vibration direction 106. The z-actuator 141 vibrates, at a predetermined frequency, on the basis of a second driving signal S₆ output from the controller 16. An example of the predetermined frequency is from about 120 to 250 Hz for both the y-actuator and the z-actuator. Additionally, an amplitude of the vibration is from about 0.02 to 1.0 mm.

The z-actuator 141 is an actuator that vibrates when an operation is performed on the first operating surface 111, the third operating surface 113, and the fourth operating surface 114. Accordingly, upon determination that an operation has been performed on the first operating surface 111, the controller 16 drives the z-actuator 141, which is capable of applying a vibration in a direction intersecting the first operating surface 111, that is, the direction of the line 111a normal to the first operating surface 111. Likewise, upon determination that an operation has been performed on the third operating surface 113, the controller 16 drives the z-actuator 141, which is capable of applying a vibration in the direction of the line 113a normal to the third operating surface 113; and, upon determination that an operation has been performed on the fourth operating surface 114, the controller 16 drives the z-actuator 141, which is capable of applying a vibration in the direction of the line 114a normal to the fourth operating surface 114.

Note that presenting the vibration in the direction intersecting the tangential plane at the detection point where the operation described above has been detected means that, for example, in a case where an operator has performed a touch operation on the first operating surface 111, the detection point is on the first operating surface 111 and, therefore, the tangential plane at the detection point is the first operating surface 111. Additionally, as an example, the direction intersecting the first operating surface 111 may be the direction of the line 111 a normal to the first operating surface 111 and, in this case, the vibration is presented by the z-actuator 141.

The y-actuator 140 and the z-actuator 141 are, for example, configured from motors, voice coils, piezoelectric elements, and the like. As an example, the y-actuator 140 and the z-actuator 141 of the present embodiment are configured from piezoelectric elements.

Specifically, the y-actuator 140 and the z-actuator 141 are, for example, monomorph actuators provided with metal plates and piezoelectric elements. The metal plate is formed of, for example, a metal material having electrical conductivity such as aluminum, nickel, copper, or iron, an alloy material containing these, or an alloy material such as stainless steel. The piezoelectric element is formed of, for example, lithium niobate, barium titanate, lead titanate, lead zirconate titanate (PZT), lead metaniobate, polyvinylidene fluoride (PVDF), or the like.

The monomorph actuators described above are actuators having a bending structure with only one sheet of piezoelectric element. Note that, as a modified example, the y-actuator 140 and the z-actuator 141 may be bimorph actuators in which two sheets of piezoelectric elements are provided on both sides of a metal plate.

### Configuration of Controller 16

The controller 16 is, for example, a microcomputer including a central processing unit (CPU) that carries out computations, processes, and the like on acquired data in accordance with a stored program; a random access memory (RAM) and a read only memory (ROM) that are semiconductor memories; and the like. A program for operations of the controller 16, for example, is stored in the ROM. The RAM is used as a storage region that temporarily stores computation results and the like, for example.

The controller 16 includes a threshold value 160, an associated information 161, and a vibration pattern 162. The threshold value 160 is a value against which the detection values acquired from the electrodes are compared. For example, the controller 16 is configured to determine that an operation has been performed in cases where an acquired detection value is greater than the threshold value 160.

Additionally, the associated information 161 is information in which the operating surface where the operation has been detected is associated with the actuator that applies the vibration in the direction intersecting the operating surface where the operation has been detected. The controller 16 is configured to determine the actuator associated with the operating surface where the operation has been detected on the basis of the associated information 161, and generate a driving signal for driving the actuator. Note that, as a modified example, the associated information 161 may be information in which coordinates are associated with actuators. In this case, the controller 16 determines the actuator to be driven from the detected detection point and the associated information 161.

The vibration pattern 162 is information of a vibration pattern according to which the actuator is caused to vibrate. The controller 16 generates the first driving signal S₅ and the second driving signal S₆ on the basis of the vibration pattern 162. Note that, as a modified example, the vibration pattern may be different for each operating surface. In this case, the operating surface is associated with the vibration pattern in the vibration pattern 162. For example, the second operating surface 112 may have a vibration pattern for which a greater vibration is generated than for the first operating surface 111, the third operating surface 113, and the fourth operating surface 114.

Here, the operator performs operations on the operating surfaces primarily using fingertips, and fingertips contain many sensory receptors, namely Pacinian corpuscles and Meissner corpuscles. Of these, Pacinian corpuscles have higher sensitivity than the other sensory receptors and are known to have the highest sensitivity at around 200 Hz.

However, in cases where a vibration is applied in a direction parallel to the operating surface that the fingertip is in contact with in a state where the fingertip is lightly in contact with the panel 10, it is thought that the Pacinian corpuscles cannot be sufficiently stimulated due to the light contact and that it is difficult for the operator to recognize the presentation of the vibration.

In the present embodiment, the vibration is presented in the direction intersecting the operating surface where the finger has been detected. Accordingly, the fingertip of the operator will be struck by the panel 10, thus effectively stimulating the Pacinian corpuscles and, as a result, the presentation of the vibration can be recognized more easily by the operator.

The controller 16 is configured to generate operation information S₇ on the basis of the electrode where the operation has been performed, and output the operation information S₇ via a communicator 17 to an air conditioning controller 36. As an example, the operation information S₇ includes information on the button that has been operated and on and off information of that button.

### Configuration of Communicator 17

As an example, the communicator 17 is electrically connected to the controller 16 and is also electrically connected to the air conditioning controller 36 of the air conditioning device 3. The communicator 17 is configured to output the operation information S₇ generated by the controller 16 to the air conditioning controller 36.

### Configuration of Air Conditioning Device 3

As illustrated in FIG. 3B, the air conditioning device 3 uses the tactile sensation presentation device 1 as an operation part. The air conditioning device 3 further includes a display portion 30, a temperature controller 32, a power source 34, and the air conditioning controller 36.

On the paper plane of FIG. 1B, the display portion 30 is disposed over the tactile sensation presentation device 1. The display portion 30 is, for example, a liquid-crystal display.

The display portion 30 includes a first display region 301 where an image depicting airflow is displayed, a second display region 302 where airflow is displayed as a bar graph, a third display region 303 where air vents are displayed, and a fourth display region 304 where the set temperature is displayed.

The temperature controller 32 is configured to adjust the temperature and airflow of air delivered from the vents in accordance with the set temperature, and also to perform switching of the vents from which the temperature-controlled air is delivered. As an example, the temperature controller 32 is configured to include a heat pump.

A battery mounted in the vehicle 5 is used as the power source 34, and the power source 34 is configured to supply suitable power P to the tactile sensation presentation device 1 and the air conditioning device 3.

The air conditioning controller 36 is, for example, a microcomputer including a CPU that carries out computations, processes, and the like on acquired data in accordance with a stored program; a RAM; a ROM; and the like. A program for operations of the air conditioning controller 36, for example, is stored in the ROM. The RAM is used as a storage region that temporarily stores computation results and the like, for example.

The air conditioning controller 36 is configured to generate a display control signal S₈ for controlling the display portion 30 on the basis of the operation information S₇ acquired from the tactile sensation presentation device 1; and also to control the temperature controller 32.

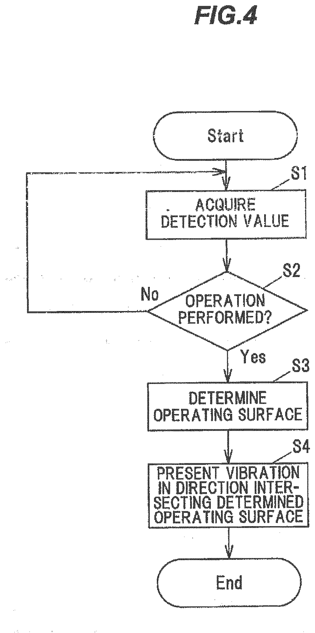

Hereinafter, the operation of the tactile sensation presentation device 1 is described, following the flow chart of FIG. 4. A case is described in which an operator performs operation on the A/C button that corresponds to the electrode 121 a, which belongs to the first electrode group 121.

### Operation

Upon the power source of the vehicle 5 being turned on, the power P is supplied via the power source 34 of the air conditioning device 3 to the display portion 30, the temperature controller 32, the air conditioning controller 36, the tactile sensation presentation device 1 of the air conditioning device 3, and the like.

The controller 16 of the tactile sensation presentation device 1 periodically acquires the first detection value S₁ to the fourth detection value S₄ from the first electrode group 121 to the fourth electrode group 124 (S1).

Next the controller 16 sequentially compares the acquired first detection value S₁ to the fourth detection value S₄ with the threshold value 160, and monitors whether or not an operation has been performed. Upon the determination in step 2 being "Yes", that is, upon detection of an operation (S2: Yes), the controller 16 determines the operating surface from the electrode where the operation has been detected (S3).

Specifically, for example, in a case where the operator has performed a touch operation on the A/C button of the first button group 11 a, the controller 16 determines that the touch operation has been performed at the electrode 121 a on the basis of the threshold value 160 and the first detection value S₁ output from the electrode 121 a corresponding to the A/C button. Then, the controller 16 determines that the operation has been performed on the first operating surface 111 from the fact that the determined electrode 121 a belongs to the first electrode group 121.

Next, the controller 16 presents a vibration in a direction intersecting the determined operating surface (S4). The controller 16 determines the actuator to be driven, on the basis of the determined operating surface and the associated information 161. Then, the controller 16 generates a driving signal for driving the determined actuator on the basis of the vibration pattern 162, and outputs the driving signal to the actuator.

Specifically, the controller 16 generates the driving signal S₆ for presenting a vibration in the direction of the line 111a normal to the determined first operating surface 111 or, rather, the second vibration direction 106, and outputs the driving signal S₆ to the z-actuator 141. The z-actuator 141 presents a vibration in the second vibration direction 106 on the basis of the acquired second driving signal S₆. The presentation of the vibration is, for example, performed in a period while the touch operation is being detected. As a modified example, the presentation of the vibration is continued for a shorter period of, for example, a period while the operation is being detected and a predetermined period following the detection of the operation.

### Effects of the First Embodiment

The tactile sensation presentation device 1 according to the present embodiment can present a tactile sensation in a direction in which a vibration can easily be felt by an operator. The tactile sensation presentation device 1 presents the vibration in the direction intersecting the operating surface, where the operation has been detected, among the first operating surface 111 to the fourth operating surface 114. Therefore, compared to cases where a vibration is presented in a plane parallel to the operating surface, the tactile sensation can be presented in a direction in which a vibration can easily be felt by an operator.

The tactile sensation presentation device 1 can present the vibration in the direction in which a vibration can easily be felt in fingertips to effectively transmit the vibration to the fingertips. Therefore, compared to a case where the presentation of tactile sensation in a direction that is difficult to feel is compensated for with the magnitude of the amplitude or the like, the size of the actuators can easily be reduced and the power consumed by the actuators can be reduced.

The tactile sensation presentation device 1 can effectively transmit the vibration to the fingertips. Therefore, even when a vibration is caused by the movement of the vehicle 5, the operator can recognize the vibrations of the first operating surface 111 to the fourth operating surface 114.

The tactile sensation presentation device 1 can present the vibration in the direction intersecting the tangential plane at the detection point where the operation has been detected regardless of whether the front surface 100 of the panel 10 has a protruding or recessed shape.

The tactile sensation presentation device 1 includes the associated information 161 and, therefore, processing load can be reduced compared to a case where associated information is not provided.

### Second Embodiment

A second embodiment differs from the first embodiment in that the protruding portion of the operating surface has a shape such as the circumference of a cylinder.

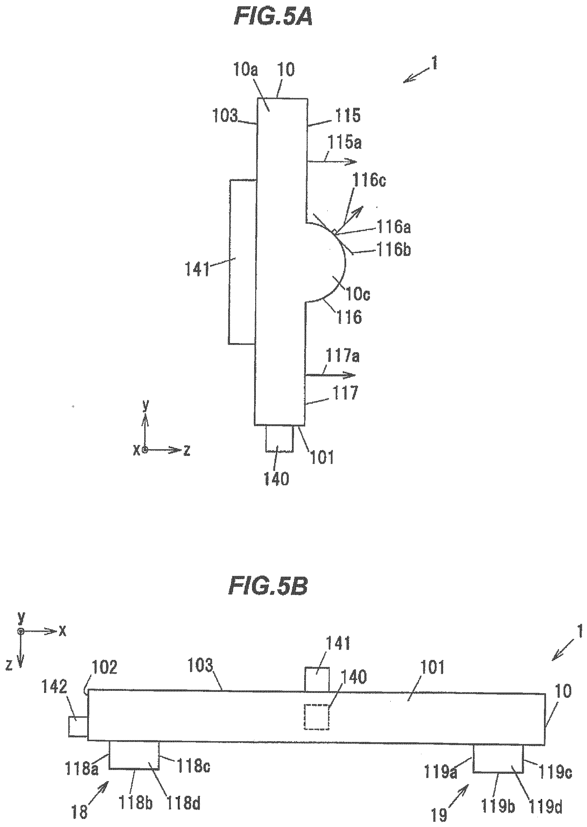

FIG. 5A is a side view illustrating a tactile sensation presentation device according to the second embodiment. In the embodiments described below, constituents having the same functions and configurations as in the first embodiment will be given the same reference numerals as in the first embodiment, and descriptions thereof will be omitted.

The tactile sensation presentation device 1 according to the present embodiment includes a protruding portion 10c that extends in the longitudinal direction of the panel 10 and has a semi-cylindrical shape. The protruding portion 10c divides the front surface 100 of the panel 10 into two surfaces, namely a first operating surface 115 and a third operating surface 117. Additionally, the circumferential surface of the protruding portion 10c constitutes a second operating surface 116.

As illustrated in FIG. 5A, the panel 10 has a shape such that a line 115 a normal to the first operating surface 115 and a line 117a normal to the third operating surface 117 intersect a line 116c normal to the second operating surface 116 via horizontal movement. Note that, in cases where the line 116c normal to the second operating surface 116 is oriented in the same direction as the normal line 115a and the normal line 117a, a vibration is presented in the same direction as when operation is performed on the first operating surface 115 and the third operating surface 117.

The detector 12 is provided with, for example, a plurality of electrodes that detect operation on the second operating surface 116.

In cases where operations are performed on the first operating surface 115 and the third operating surface 117, the controller 16 drives the z-actuator 141 on the basis of the associated information 161. Additionally, in cases where an operation is performed on the second operating surface 116, the controller 16 drives the actuators on the basis of the detection point where the operation has been detected and the associated information 161. Accordingly, in the associated information 161, a detection point 116a of the second operating surface 116 is associated with the actuator that will present the vibration.

Specifically, as illustrated in FIG. 5A, in a case where an operator brings a fingertip into contact with the detection point 116a of the second operating surface 116, the line 116c normal to the tangential plane 116b at the detection point 116a is uniquely determined. Accordingly, the controller 16 generates a driving signal for presenting a vibration in the direction of the normal line 116c.

The second operating surface 116 is a curved surface. Accordingly, the controller 16 generates the first driving signal S₅ and the second driving signal S₆ for generating the vibration in the direction of the normal line 116c by synthesizing the driving for the y-actuator 140 and the driving for the z-actuator 141. A pattern of the synthesized driving is, for example, stored in the controller 16 as the vibration pattern 162.

### Effects of the Second Embodiment

The tactile sensation presentation device 1 according to the present embodiment applies the vibration in the direction intersecting the tangential plane at the detection point regardless of the operating surface having a shape including a curved surface and, therefore, can effectively present tactile sensation.

### Third Embodiment

A third embodiment differs from the embodiments described above in that the vibration is presented in three-axis directions of the xyz system.

FIG. 5B is a top view illustrating a tactile sensation presentation device according to the third embodiment. As illustrated in FIG. 5B, this tactile sensation presentation device 1 is provided with an x-actuator 142 in addition to the y-actuator 140 and the z-actuator 141.

The x-actuator 142 is, for example, attached to a side surface 102 on the left side of the panel 10, on the paper plane of FIG. 5B, and is configured to cause the panel 10 to vibrate in the x-axis direction.

As illustrated in FIG. 5B, the panel 10 is provided with a first protruding portion 18 and a second protruding portion 19 that protrude from the front surface 100 of the panel 10. The first protruding portion 18, on the paper plane of FIG. 5B, includes a first surface 118a that is a side surface on the left side, a second surface 118b that is the front surface of the panel 10, and a third surface 118c that is a side surface on the right side. The detector 12 is configured to detect operations performed on the first surface 118a to the third surface 118c.

Additionally, the second protruding portion 19, on the paper plane of FIG. 5B, includes a first surface 119a that is a side surface on the left side, a second surface 119b that is the front surface of the panel 10, and a third surface 119c that is a side surface on the right side. The detector 12 is configured to detect operations performed on the first surface 119a to the third surface 119c.

The tactile sensation presentation device 1 is configured to present a vibration in the x-axis direction in cases where an operator has performed an operation on any one of the first surface 118a and the third surface 118c of the first protruding portion 18, and the first surface 119a and the third surface 119c of the second protruding portion 19. Accordingly, the controller 16 generates a driving signal for driving the x-actuator 142 and outputs the driving signal to the x-actuator 142. The x-actuator 142 causes the panel 10 to vibrate in the x-axis direction on the basis of the driving signal, thereby presenting a tactile sensation.

### Effects of the Third Embodiment

The tactile sensation presentation device 1 according to the present embodiment is provided with the x-actuator 142, the y-actuator 140, and the z-actuator 141 that are capable of applying vibrations in directions intersecting each other. Therefore, regardless of the shape of the operating surface being a complex shape, the tactile sensation presentation device 1 can apply a vibration in a direction intersecting the tangential plane of the detected detection point, thereby presenting a tactile sensation.

Note that the directions that the tactile sensation is presented in each of the embodiments described above are preferably directions of normal lines based on the detection point, but are not limited thereto. Provided that the directions intersect the tangential plane at the detection point, the directions may be inclined form the normal lines within a predetermined range. As an example, the predetermined range is preferably from 0° to 30°, and is more preferably from 0° to 10°.

Additionally, in the embodiments described above, the tactile sensation presentation device 1 is the operation part of the air conditioning device 3, but the configuration of the present invention is not limited thereto, and the tactile sensation presentation device 1 can be used as an operation part of an electronic device installed in the vehicle 5. Examples of this electronic device include car navigation devices, music playback devices, video playback devices, and the like.

In the embodiments described above, protruding portions are formed in the front surface 100 of the panel 10 that protrude from the front surface 100 toward an operator, but the configuration of the present invention is not limited thereto. A configuration is possible in which a portion recessed from the front surface 100 is provided.

According to the tactile sensation presentation device 1 according to any one of the embodiments described above, it is possible to present a tactile sensation in a direction in which a vibration can easily be felt by an operator.

A portion of the tactile sensation presentation device 1 according to the embodiments and modified examples described above may, depending on the application, be realized by a program executed by a computer, an application specific integrated circuit (ASIC), a field programmable gate array (FPGA), or the like.

Note that ASIC is an application specific integrated circuit, and FPGA is a large scale integrated (LSI) circuit that can be programmed.

Although several embodiments of the present invention and modified examples thereof have been described above, these embodiments and modified examples are merely examples, and the invention according to claims is not intended to be limited thereto. Such novel embodiments and modified examples can be implemented in various other forms, and various omissions, substitutions, changes, and the like can be made without departing from the spirit and scope of the present invention. In addition, all combinations of the features described in these embodiments and modified examples are not necessary to solve the problem. Furthermore, these embodiments and modified examples are included within the spirit and scope of the invention and also within the scope of the invention described in the claims and equivalents thereof.

### Industrial Applicability

The present invention can be applied to a tactile sensation presentation device used as an operation part of an air conditioning device or other electronic device mounted in a vehicle.

### Reference Signs List

- 1: TACTILE SENSATION PRESENTATION DEVICE
- 10: PANEL
- 10b: PROTRUDING PORTION
- 10c: PROTRUDING PORTION
- 12: DETECTOR
- 14: TACTILE SENSATION PRESENTER
- 16: CONTROLLER
- 100: FRONT SURFACE
- 105: FIRST VIBRATION DIRECTION
- 106: SECOND VIBRATION DIRECTION
- 111 to 114: FIRST OPERATING SURFACE TO FOURTH OPERATING SURFACE
- 111a to 114a: NORMAL LINES
- 116a: DETECTION POINT
- 116b: TANGENTIAL PLANE
- 140: Y-ACTUATOR
- 141: Z-ACTUATOR
- 142: X-ACTUATOR

## Claims

1. A tactile sensation presentation device, comprising:
a panel comprising, within a panel operating surface, a surface shape such that respective normal lines at two different points intersect by being parallel moved;
a detector that detects an operation performed on the panel operating surface;
a tactile sensation presenter that presents a tactile sensation to an operator by providing a vibration to the panel; and
a controller that controls the tactile sensation presenter so as to present the vibration in a direction intersecting a tangential plane including a detection point where the operation is detected.

2. The device according to claim 1, wherein the panel operating surface comprises a plurality of operating surfaces with the surface shape, and
wherein the controller controls the tactile sensation presenter so as to present the vibration in the direction intersecting the tangential plane including the detection point, in any one operating surface of the plurality of operating surfaces.

3. The device according to claim 2, wherein the tactile sensation presenter comprises a plurality of actuators that provide the vibration to the panel, and
wherein the controller comprises associated information in which the detection point where the operation is detected is associated with the actuators that provide the vibration in the direction intersecting the tangential plane including the detection point.

4. The device according to claim 1, wherein the panel operating surface comprises an operating surface with a curved surface,
wherein the tactile sensation presenter comprises a plurality of actuators that provide the vibration to the panel, and
wherein the controller provides the vibration in the direction intersecting the tangential plane by synthesizing the vibration of the plurality of actuators.

5. The device according to claim 1, wherein the direction intersecting the tangential plane is a direction in a range within 30 degrees from a normal line at the tangential plane.
